# DEMANDE DE BREVET EUROPEEN

(11) **EP 0 595 682 A1**
(43) Date de publication de la demande: **04.05.1994**
(21) Numéro de dépôt: 93402547.9
(22) Date de dépôt: 15.10.1993
(51) Int. Cl.: G01S 7/06

(54) **Procédé et dispositif de traitement de la remanence artificielle d'informations numériques**

(30) Priorité: 27.10.1992 FR 9212775
(71) Demandeur: THOMSON-CSF, 75008 Paris (FR)
(72) Inventeur: Ligocki, Philippe, F-92402 Courbevoie Cedex (FR)
(74) Mandataire: Benoit, Monique

(57) **Abrégé**

La présente invention concerne un procédé et un dispositif de traitement de la rémanence artificielle d'informations numériques.

Elle s'applique à tous les dispositifs du type comportant une mémoire (10) dans laquelle on écrit des informations nouvelles pendant une phase d'écriture, et l'on vient lire les informations mémorisées pendant une phase de lecture pour leur exploitation.

Le procédé selon l'invention consiste à effectuer, pendant la phase de lecture, une opération de modifications des informations lues, parallèlement à leur exploitation, si et seulement si une autorisation de modification est validée, puis de réécrire l'information modifiée à la même adresse de la mémoire à laquelle elle a été lue. Un domaine d'application de l'invention concerne les TDI utilisés par exemple dans les radars.

## Description

La présente invention concerne un procédé et un dispositif de traitement de la rémanence artificielle d'informations numériques.

Certaines méthodes de rémanence artificielle d'informations numériques sont actuellement utilisées dans les transformateurs numériques d'images.

On rappelle qu'un transformateur numérique d'images, ou TDI (Transformateur Digital d'Images), a pour rôle essentiel de transformer des informations radar ou sonar, fournies en coordonnées polaires et à renouvellement relativement lent, en une image du type télévision. Pour ce faire, le TDI doit donc principalement réaliser les fonctions suivantes:
- Acquisition et traitement de la vidéo radar (Echantillonnage-Numérisation, dosages, et éventuellement mélanges avec d'autres données numériques);
- Conversion des coordonnées polaires en coordonnées cartésiennes ;
- Vieillissement artificiel (rémanence) des points de l'image pour simuler les écrans à phosphore persistant;
- Exploitation de données mémorisées pour obtenir une sortie télévision.

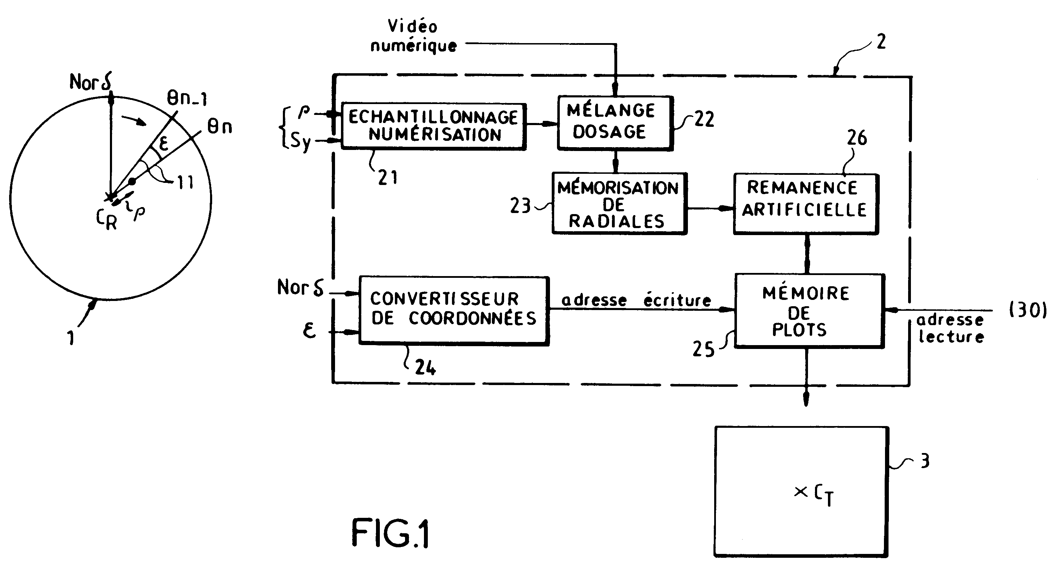

La figure 1 illustre le fonctionnement d'un TDI classique recevant des informations d'un radar dont le faisceau d'antenne effectue une rotation quasi-constante:

Sur cette figure 1, on a schématisé un écran radar 1 de centre C_{R}, un TDI classique 2, et un écran de télévision 3 dont le centre C_{T} peut être confondu avec C_{R}. Les informations vidéo analogiques du radar parviennent en coordonnées polaires (r, qₙ), correspondant à une vidéo détectée à une distance r du centre radar C_{R} pour un angle de visée qₙ pris par rapport à une direction de référence (par exemple le Nord). En fonction du temps, l'angle qₙ s'incrémente de façon régulière d'un pas constant ℓ de sorte qu'à chaque tour d'antenne, les informations vidéo correspondent aux mêmes directions qₙ, que l'on appellera par la suite radiales. Sur l'écran radar 1, on a représenté deux radiales 11 successives qₙ-1 et qₙ, séparées d'un angle ℓ. Le fonctionnement classique du TDI 2 est le suivant:

Le TDI 2 comporte un module d'échantillonnage-codage 21 chargé de numériser la vidéo r qu'il reçoit sur l'une de ses entrées, l'autre entrée étant constituée d'un signal de synchronisation S_{y} indiquant qu'une impulsion a été émise par le radar. Ce même radar peut délivrer également d'autres vidéos numériques (données de cartographie par exemple), lesquelles sont dosées, et mélangées le cas échéant par un module de mélange et de dosage 22, aux échantillons issus du module d'échantillonnage et de codage 21. L'information vidéo numérisée correspondant aux différentes radiales est alors mémorisée dans un module de mémorisation 23. Le TDI 2 comporte par ailleurs un convertisseur de cordonnées 24 calculant, à partir des signaux de rotation composés d'une impulsion indiquant le passage du faisceau par le Nord et de l'incrément angulaire ℓ, les adresses auxquelles les informations mémorisées dans le module de mémorisation 23 doivent être écrites dans un mémoire de plots 25, laquelle mémoire doit comporter au moins autant de cases-mémoire que l'image affichée sur l'écran de télévision comporte de points.

La régularité de rotation du faisceau d'antenne est également utilisée par un module 26 de vieillissement artificiel des données dont le rôle est de créer, pour les informations contenues dans la mémoire de plots 25, un effet de rémanence comparable à celui qui se produirait sur un tube à phosphore persistant. A chaque tour d'antenne, le module de vieillissement artificiel 26 modifie les données de la radiale mémorisée par rapport aux nouvelles données de la même radiale issue du module de mémorisation 23, avec une loi de décroissance adaptée à l'effet visuel désiré. Les données de la mémoire de plots 25 sont lues ligne par ligne grâce à un ensemble de moyens de lecture 30 (non représentés) assurant l'adressage en lecture de la mémoire de plots 25. Les phases de lecture de la mémoire 25 à destination de l'écran de télévision 3, et d'écriture dans cette mémoire sont asynchrones, la lecture étant prioritaire sur l'écriture.

La description qui précède des TDI actuels montre bien que leur fonctionnement, notamment en ce qui concerne le vieillissement artificiel, est complètement lié au fait que les radars pour lesquels on a étudié ces TDI sont des radars à faisceaux déterministes par la régularité de leur rotation.

Or, dans le cas où le porteur radar est mobile, le fonctionnement des TDI actuels ne garantit pas que les plots mémoire atteints pour un tour d'antenne, le soient au tour suivant, ce qui a pour effet de laisser des traces sur les écrans de visualisation de plots n'ayant pas subi de rémanence. Cela nécessite alors d'effectuer des effacements périodiques de l'image pour enlever les plots parasites.

Par ailleurs, avec l'arrivée des radars à balayage électronique, la régularité de succession angulaire n'existe plus forcément. En effet, ce type de radars effectue généralement un balayage de l'espace de manière pseudo-aléatoire, en fonction d'évènements et de traitements issus de résultats précédents. Il peut même arriver que le radar envoie plusieurs impulsions successivement dans une même direction. Les TDI existants sont alors inopérants, du point de vue du traitement de la rémanence.

Le but de la présente invention est de proposer un procédé et un dispositif de vieillissement artificiel d'informations numériques, qui, appliqués notamment aux informations traitées par un TDI, puissent fonctionner aussi bien pour les informations fournies par un faisceau à rotation régulière que pour celles fournies par un faisceau non déterministe.

Plus précisément, un premier objet de l'invention est un dispositif de traitement de la rémanence artificielle d'informations numériques, tel que défini dans les revendications 1 à 16.

Un second objet de l'invention est un procédé de traitement de la rémanence artificielle d'informations numériques, tel que défini dans les revendications 17 à 19.

La présente invention, ainsi que ses avantages, seront mieux compris au vu de la description suivante, faite en référence aux figures annexées.
- La figure 1 est un synoptique d'un TDI selon l'art antérieur;
- La figure 2 est un synoptique du dispositif de vieillissement artificiel selon l'invention.

Le principe du procédé selon l'invention consiste à décoreller le processus de rémanence artificielle dans la mémoire mémorisant les informations numériques à traiter, de la phase d'écriture contrairement à ce qui se faisait jusqu'à présent.

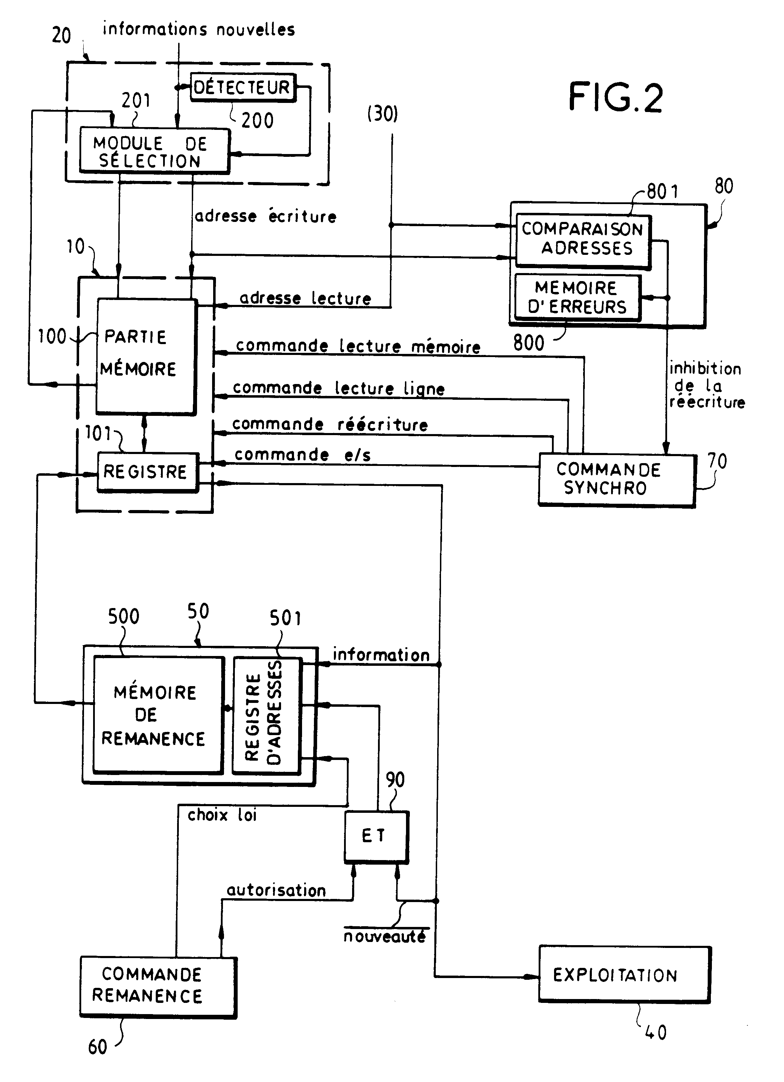

Pour ce faire, le dispositif de rémanence artificielle selon l'invention comporte, conformément à la figure 2, en plus d'une mémoire 10 pour mémoriser les informations numériques pendant une phase d'écriture, des moyens de modification 50 susceptibles d'effectuer pendant la phase de lecture des informations, et parallèlement à leur exploitation, une modification des informations lues dans la mémoire 10, selon une loi de rémanence donnée, lorsqu'une autorisation est donnée par des moyens de commande 60, et des moyens 70 délivrant une commande de réécriture des informations modifiées au même endroit de la mémoire auquel elles ont été lues. Ainsi, le processus de rémanence n'est plus du tout associé à l'écriture des informations dans la mémoire 10, mais à leur lecture.

Avantageusement, la mémoire 10 est une mémoire double port de type vidéoram, constituée d'une partie mémoire 100 comportant par exemple N lignes et M colonnes pour stocker des informations numériques, et d'un registre à décalage 101 comportant préférentiellement M cases mémoires, et relié à la partie mémoire 100 de telle façon qu'une commande de lecture d'une ligne de la mémoire 10 permette de transférer simultanément toutes les informations numériques contenues dans cette ligne, dans le registre à décalage 101. De cette manière, le processus de rémanence selon l'invention va s'effectuer sur les informations contenues momentanément dans le registre à décalage 101, laissant par conséquent la ligne de la partie mémoire 100 disponible pour effectuer des phases d'écriture.

Selon l'invention, les moyens de modification 50 comportent une mémoire de rémanence 500 contenant les valeurs des informations modifiées selon une loi de rémanence prédéterminée. Cette mémoire de rémanence 500 est utilisée comme une table d'index, c'est-à-dire que la valeur de l'information lue dans la mémoire 10 constitue l'adresse de la mémoire de rémanence à laquelle on va prendre la valeur de l'information modifiée pour la réécrire dans la mémoire 10, à la même adresse à laquelle elle a été lue. Ce cycle d'adressage et de réécriture de l'information modifiée se fait au rythme d'une horloge de commande d'entrée-sortie de la mémoire 10, fournie préférentiellement par les moyens de commande 70.

Dans le mode de réalisation avantageux du dispositif selon l'invention, présenté sur la figure 2, dans lequel la mémoire 10 comporte un registre à décalage 101, l'horloge de commande d'entrée-sortie précédemment décrite correspond à la cadence de décalage du registre 101. L'information lue qui adresse la mémoire de rémanence 500 est délivrée par le registre à décalage 101, et l'information modifiée est réinjectée à l'entrée du registre à décalage 101. Lorsque toutes les informations contenues initialement dans le registre à décalage 101 ont été réinjectées, après modification, dans ce registre à décalage, elles ont exactement la même place qu'à l'origine, et peuvent être réécrites dans la partie mémoire 100. Le séquencement exact d'une phase de lecture préférentiellement complète de toutes les lignes de la mémoire 10, déclenchée par une commande de lecture mémoire est, dans ce cas précis, le suivant:
- Lorsque la partie mémoire 100 reçoit une commande de lecture d'une ligne de la mémoire, délivrée préférentiellement par les moyens de commande 70, toutes les informations d'une ligne sont transférées dans le registre à décalage 101.
- Ces informations sont alors fournies successivement, à la cadence de décalage du registre, délivrée avantageusement par les mêmes moyens de commande 70, d'une part, aux moyens d'exploitation 40 comprenant par exemple un écran de visualisation, et d'autre part à la mémoire de rémanence 500 afin de l'adresser.
- A la même cadence que précédemment, les informations modifiées, issues de la mémoire de rémanence 500 sont réinjectés dans le registre à décalage 101.
- Lorsque toutes les informations contenues à l'origine dans le registre à décalage ont été traitées, la commande de réécriture fournie par les moyens de commande 70 va commander l'écriture des informations contenues dans le registre à décalage 101 dans la partie mémoire 101.

Les étapes précédentes sont répétées pour toutes les lignes de la mémoire 10. A la phase de lecture suivante, les informations modifiées sont exploitées, et parallèlement modifiées à nouveau, et ainsi de suite.

Il est préférable que les modifications selon une loi de rémanence donnée s'effectuent identiquement pour toutes les informations contenues dans la mémoire 10. C'est pourquoi l'autorisation de modification ne peut être validée qu'au début d'une phase de lecture de la mémoire 10.

De même, le vieillissement des informations n'est pas à faire à chaque phase de lecture de la mémoire 10. Il faut donc pouvoir invalider l'autorisation. Pour ce faire, un bit d'autorisation est fourni par les moyens de commande 60 aux moyens de modification 50, la valeur de ce bit d'autorisation validant ou invalidant l'autorisation.

Avantageusement, la mémoire de rémanence 500 est une mémoire de type SRAM, c'est-à-dire statique, de façon à traiter les informations rapidement, tout en conservant un temps de traitement constant, quelle que soit la valeur du bit d'autorisation. Par ailleurs, les mémoires SRAM modernes disposent couramment de capacité de 16 à 256 kbits, ce qui permet de stocker, dans une même mémoire de rémanence 500, plusieurs lois de rémanence. Le choix de la loi pour un cycle de lecture donné peut s'effectuer par une commande fournie par exemple par les moyens de commande 60 aux moyens de modification 50.

Pour être certain d'adresser la mémoire de rémanence 500 de façon stable, les moyens de modification peuvent avantageusement comporter un registre d'adresses 501 placé en amont de la mémoire de rémanence 500, combinant par exemple la valeur d'une information lue avec la valeur du bit d'autorisation et le numéro de loi choisie pour former une adresse venant indexer la mémoire de rémanence 500. Si l'autorisation est invalidée, l'adresse fournie par le registre d'adresses 501 permet alors d'aller dans une zone de la mémoire de rémanence 500 où le contenu est égal à la valeur de l'information lue, ce qui a pour effet de ne pas modifier cette information.

L'adressage de la mémoire de rémanence 500 tel qu'il vient d'être décrit permet une très grande souplesse dans la définition des lois de rémanence. Si on visualise les informations sur un écran de visualisation 3, on peut par exemple adapter la décroissance lumineuse des points visualisés précisément à l'effet visuel désiré.

On peut également modifier la loi à volonté, et permettre ainsi de créer, sur un écran de visualisation, des formes très sophistiquées de rémanence proche du traitement de données. Pour des images fournies par un radar, ce dispositif permet par exemple de filtrer des échos parasites provenant par exemple du clutter de mer, par modification appropriée des lois de rémanence appliquées.

Par ailleurs, nous rappelons qu'il n'y a pas de relation temporelle entre l'écriture des informations numériques dans la mémoire 10, et la lecture de ces mêmes informations pour leur exploitation. De par cet asynchronisme, il peut arriver qu'une rémanence se produise sur une information que l'on vient tout juste d'écrire dans la mémoire. Dans le cas d'une visualisation d'une image radar, cela se traduit ainsi par la décroissance d'amplitude immédiate d'un écho, provoquant une incohérence dans l'aspect de l'image visualisée. Ce défaut peut être évité en associant à chaque information, une donnée qui va indiquer la nouveauté de l'information.

Dans le cas d'informations numériques sous forme d'une pluralité de bits, cette donnée peut être constituée d'au moins un bit, dit bit de nouveauté, dont la valeur indiquera si l'information mémorisée est nouvelle, c'est-à-dire si l'on vient de l'écrire, ou non. Pour tenir compte de cette donnée dans le traitement de la rémanence, on munit le dispositif selon l'invention de moyens logiques 90 invalidant l'autorisation de modification d'une information dont le bit de nouveauté indique qu'elle est nouvelle. L'information est alors réécrite telle quelle dans la mémoire 10, son bit de nouveauté étant cependant changé de façon à ce que le traitement de rémanence lui soit appliqué à la phase de lecture suivante. Ces moyens logiques 50 sont par exemple constitués d'une porte logique ET à deux entrées, recevant, sur une première entrée, le bit d'autorisation issu des moyens de commande 60, et, sur sa deuxième entrée, le complémentaire du bit de nouveauté. La sortie de la porte ET délivre alors une autorisation validée ou invalidée aux moyens de modification 50.

Dans le cas d'une visualisation des informations numériques sur un écran de visualisation, la donnée supplémentaire que constitue le bit de nouveauté peut aussi être utilisée par les moyens d'exploitation de manière à présenter les nouvelles informations dans une couleur différente des anciennes. Cette fonction est très intéressante car elle permet de distinguer de manière non équivoque les nouvelles informations des anciennes.

Dans le dispositif de traitement selon l'invention, il est apparu souhaitable de modifier les modalités d'écriture. En effet, en se replaçant dans le contexte des radars à balayage électronique, lesquels peuvent envoyer successivement des impulsions dans une même direction, il est important de pouvoir ne mémoriser des informations relatives à une radiale que si elles sont significatives par rapport à ce qui a été mémorisé précédemment, et sans pour autant supprimer ce qui a été mémorisé antérieurement pour cette même radiale.

Plus précisément, il faut, dans la phase d'écriture, tester la valeur d'une information nouvelle et ne l'écrire que si elle est non nulle. Dans le cas contraire, on écrit à nouveau dans la mémoire 10 l'information qui était déjà mémorisée à cette adresse. Cette précaution a pour objectif de conserver dans tous les cas de figures la notion d'information la plus récente.

Dans cette optique, les moyens d'écriture 20 comportent un détecteur 200 recevant à son entrée les informations nouvelles et détectant si leur valeur est nulle, ainsi qu'un module de sélection 201, recevant à ses deux entrées les informations nouvelles ainsi que les informations mémorisées aux mêmes adresses, le module de sélection 201 étant commandé par la sortie du détecteur 200 pour délivrer l'information à écrire effectivement dans la mémoire 10.

Tout le dispositif selon l'invention que l'on vient de décrire fonctionnerait parfaitement bien si il n'existait pas une probabilité, faible mais non nulle, pour qu'une écriture d'informations se fasse aux mêmes adresses que des informations que l'on est en train de modifier. Dans ce cas, les informations que l'on vient d'écrire sont écrasées, donc perdues, au moment de la réécriture des informations modifiées à ces mêmes adresses. Pour parer à cette éventualité, le dispositif selon l'invention est muni de moyens de détection 80 détectant si une écriture d'une nouvelle information a lieu à la même ligne d'adresse que la lecture d'information mémorisée, et inhibant dans ce cas précis les moyens 70 commandant la réécriture de l'information modifiée.

Ces moyens de détection comportent par exemple un module de comparaison 801 des adresses d'écriture et de lecture. Avantageusement, les adresses détectées sont mémorisées dans une mémoire d'erreur 800. Ainsi, à la fin d'une phase de lecture, avant qu'une autre phase de lecture ne commence, on peut utiliser les adresses mémorisées dans la mémoire d'erreur 800 pour commander une nouvelle lecture des informations contenues à ces adresses, et leur modification suivant la loi de rémanence en vigueur.

L'invention est particulièrement intéressante dans le domaine de la visualisation d'informations fournies par un radar sur un écran de type télévision.

En effet, le dispositif tel qu'il vient d'être décrit peut fonctionner sans problème avec n'importe quel type de radar, qu'il soit à balayage déterministe ou non, mobile ou fixe.

On peut utiliser des écrans de visualisation comportant par exemple entre 1024 et 2048 points par ligne, et entre 1024 et 2048 lignes par trame. Les commandes de phase de lecture de la mémoire 10 du TDI, de lecture de ligne et de réécriture d'une ligne modifiée sont fournies par exemple par les circuits de synchronisation classiques de télévision. Avantageusement, le temps nécessaire au traitement de tous les points d'une image est égal à une trame TV.

L'autorisation de modification des données, donc du temps séparant les cycles de rémanence, est programmée modulo une trame TV, ce qui permet une très grande résolution par rapport à la perception de l'opérateur. Avantageusement, on effectue la modification de l'autorisation pendant le temps de retour d'une trame pour qu'il n'y ait aucune perturbation visuelle perceptible à l'écran. Ce temps de retour peut être aussi utilisé pour effectuer toutes les corrections nécessaires dues à la détection d'une égalité d'adresses de lecture et d'écriture par les moyens de détection 80.

En fonction de la définition de l'image à visualiser, l'organisation de la mémoire 10 doit s'adapter au débit d'informations à fournir. Le temps de cycle de la mémoire et la cadence de décalage du registre 101 sont fixés par la technologie des VRAM disponibles sur le marché.

Il peut s'avérer nécessaire de traiter plusieurs pixels en parallèle, par exemple huit pixels, pour tenir le débit d'informations en sortie vers l'écran de visualisation. Cela implique de mettre en sortie autant de moyens de traitement de la rémanence 500 qu'il y a de pixels à traiter.

Le parallélisme peut aussi s'effectuer sur chaque bit d'une information numérique en utilisant des mémoires comportant plusieurs plans mémoire, typiquement un par bit d'informations.

## Revendications

1. Dispositif de traitement de la rémanence artificielle d'informations numériques, du type comportant une mémoire (10) contenant lesdites informations numériques, des moyens (20) pour écrire des informations nouvelles pendant une phase d'écriture, et des moyens (30) pour lire les informations mémorisées pendant une phase de lecture déclenchée par une commande de lecture, de manière à les fournir à des moyens d'exploitation (40), le dispositif étant caractérisé en ce qu'il comporte, en outre:
- des moyens de modification (50) susceptibles d'effectuer, pendant la phase de lecture des informations mémorisées et parallèlement à leur exploitation, une modification des informations lues selon une loi de rémanence donnée;
- des moyens (60) pour commander ladite modification si et seulement si une autorisation est validée;
- des moyens (70) délivrant une commande de la réécriture de l'information modifiée à la même adresse de la mémoire (10) à laquelle elle a été lue.

2. Dispositif de traitement selon la revendication 1, caractérisé en ce que ladite mémoire (10) est une mémoire constituée d'une partie mémoire (100) de N lignes et M colonnes, et d'un registre à décalage (101) de taille M, et en ce qu'une commande de lecture de ligne permet de transférer en même temps toutes les informations numériques contenues dans une ligne, dans le registre à décalage.

3. Dispositif de traitement selon la revendication 1, caractérisé en ce que les moyens de modification (50) comportent une mémoire de rémanence (500) contenant des informations modifiées selon ladite loi de rémanence, ladite mémoire de rémanence (500) étant adressée, au rythme d'une horloge de commande d'entrée-sortie de la mémoire (10), par la valeur des informations lues, et délivrant à la mémoire (10), au rythme de la même horloge, lesdites informations modifiées.

4. Dispositif de traitement selon les revendications 2 et 3, caractérisé en ce que les informations lues adressant la mémoire de rémanence (500) sont délivrées par le registre à décalage (101), en ce que les informations modifiées sont fournies au même registre à décalage (101), et en ce que l'horloge de commande d'entrée-sortie correspond à la cadence de décalage du registre, la réécriture des informations modifiées s'effectuant de ce fait lorsque toute une ligne a été lue.

5. Dispositif de traitement selon l'une quelconque des revendications précédentes, caractérisé en ce que les moyens (70) commandant la réécriture de l'information sont inhibés par des moyens de détection (80) détectant si une écriture d'une nouvelle information a lieu à la même adresse qu'une lecture d'information mémorisée.

6. Dispositif de traitement selon la revendication 5, caractérisé en ce que toutes les adresses détectées par les moyens de détection (80), pendant une phase de lecture de la mémoire, sont mémorisées dans une mémoire d'erreur (800), et en ce que, avant qu'une nouvelle commande de lecture de la mémoire (10) ne déclenche une nouvelle phase de lecture, les adresses mémorisées dans la mémoire d'erreur (800) sont utilisées pour commander à nouveau la lecture des informations correspondant et leur modification par les moyens de modification (50).

7. Dispositif de traitement selon l'une quelconque des revendications 5 ou 6, caractérisé en ce que les moyens de détection (80) comportent un module de comparaison (801) des adresses de lecture et d'écriture.

8. Dispositif de traitement selon l'une quelconque des revendications précédentes, caractérisé en ce que l'autorisation de modification ne peut être validée qu'au début d'une phase de lecture.

9. Dispositif de traitement selon l'une quelconque des revendications précédentes, caractérisé en ce que les moyens (60) pour commander ladite modification délivrent aux moyens de modification (50) un bit d'autorisation dont la valeur valide ou invalide l'autorisation, et une commande permettant le choix de la loi de rémanence à appliquer parmi un ensemble de lois prédéterminées.

10. Dispositif de traitement selon l'une quelconque des revendications précédentes, caractérisé en ce que les informations numériques sont sous forme d'une pluralité de bits, et en ce qu'au moins un bit, appelé bit de nouveauté, indique si une information mémorisée est nouvelle ou non.

11. Dispositif de traitement selon la revendication 10, caractérisé en ce qu'il comporte des moyens logiques (90) invalidant l'autorisation de modification d'une information dont le bit de nouveauté indique qu'elle est nouvelle, cette information étant alors réécrite telle quelle dans la mémoire et son bit de nouveauté modifié de façon à ce que le traitement de rémanence lui soit appliquée à la phase de lecture suivante.

12. Dispositif de traitement selon les revendications 9 et 11, caractérisé en ce que les moyens logiques (90) sont constitués d'une porte ET à deux entrées recevant sur une première entrée le bit d'autorisation, et sur une deuxième entrée le complémentaire du bit de nouveauté, et délivrant ou non l'autorisation de modification.

13. Dispositif de traitement selon les revendications 3 et 12, caractérisé en ce que les moyens de modification (50) comprennent en outre un registre d'adresses (501) adressant la mémoire de rémanence (500), et recevant à ses entrées l'information lue, la sortie de la porte ET (90) et le choix de la loi de rémanence.

14. Dispositif de traitement selon l'une quelconque des revendications précédentes, caractérisé en ce que les moyens (20) pour écrire une information nouvelle sont constitués d'un détecteur (200) recevant à son entrée la nouvelle information et détectant si cette information est nulle, et un module de sélection (201) recevant l'information nouvelle et l'information mémorisée, commandé par le détecteur (200) et délivrant à la mémoire (10) la nouvelle information si elle n'est pas nulle, ou l'information mémorisée dans la mémoire (10) si l'information nouvelle est nulle.

15. Dispositif de traitement selon les revendications 2 et 3, caractérisé en ce que les moyens de commande (70) fournissent les commandes de lecture de la mémoire (10), de lecture d'une ligne de la mémoire (10), de réécriture d'une ligne dans la mémoire (10) et d'entrée-sortie.

16. Dispositif de traitement selon l'une quelconque des revendications précédentes, caractérisé en ce que les informations nouvelles sont fournies par un transformateur numérique d'images transformant les informations provenant d'un radar (1) et fournies en coordonnées polaires en une image de type télévision en coordonnées cartésiennes de manière à les afficher sur un écran de télévision (3) compris dans lesdits moyens d'exploitation (7), et en ce que les informations transformées sont mémorisées dans une mémoire de plots (25) constituant ladite mémoire du dispositif.

17. Procédé de traitement de la rémanence artificielle d'informations numériques dans un dispositif comportant une mémoire (10) dans laquelle on écrit des informations nouvelles pendant une phase d'écriture, et l'on vient lire les informations mémorisées pendant une phase de lecture de manière à les exploiter, le procédé étant caractérisé en ce qu'il consiste à effectuer, pendant la phase de lecture, une opération de modification des informations lues selon une loi de rémanence donnée, parallèlement à leur exploitation, si et seulement si une autorisation est validée, chaque information modifiée étant ensuite réécrite à la même adresse de la mémoire à laquelle elle a été lue.

18. Procédé de traitement selon la revendication 17, caractérisé en ce qu'il consiste, en outre, à effectuer, pendant la phase d'écriture d'une information nouvelle dans la mémoire (10) à une adresse donnée, les étapes suivantes:
- tester la valeur de la nouvelle information,
- écrire cette valeur à ladite adresse si et seulement si elle est non nulle.

19. Procédé de traitement selon l'une quelconque des revendications 17 et 18, caractérisé en ce qu'il consiste en outre à détecter si une écriture a lieu en même temps que la lecture, de façon à interdire le cas échéant la réécriture des informations modifiées.
